# EUROPEAN PATENT APPLICATION

(11) **EP 4 539 414 A1**
(43) Date of publication of application: **16.04.2025**
(21) Application number: 23822816.7
(22) Date of filing: 28.04.2023
(51) Int. Cl.: H04L 41/0668

(54) **FAULT PROCESSING METHOD, NETWORK ELEMENT, AND STORAGE MEDIUM**

(30) Priority: 13.06.2022 CN 202210659893
(71) Applicant: ZTE Corporation, Shenzhen, Guangdong 518057 (CN)
(72) Inventor: ZHU, Jie, Shenzhen, Guangdong 518057 (CN)
(74) Representative: Savi, Massimiliano
(86) International application number: PCT/CN2023/091904
(87) International publication number: WO 2023/241245

(57) **Abstract**

Provided in the present application are a fault processing method, a network element, and a storage medium. The fault processing method comprises: when it is detected that a stacked and aggregated link is in a disconnected state, determining a target network device from network devices, wherein the target network device is respectively in communication connection with a first forwarding device and a second forwarding device (S210): and performing data communication with the second forwarding device by means of the target network device (S220).

## Description

### CROSS-REFERENCE TO RELATED APPLICATION

This application is filed on the basis of Chinese patent application No. 202210659893.5 filed June 13, 2022, and claims priority to the Chinese patent application, the entire contents of which are incorporated herein by reference.

### TECHNICAL FIELD

The present disclosure relates to, but not limited to, the technical field of communication, and in particular, to a fault processing method, a network element, and a storage medium.

### BACKGROUND

A network cluster is a cluster system consisting of multiple network devices and multiple forwarding devices interconnected by optical fibers, and is a mainstream technology for the capacity expansion of network devices. Network devices in a network cluster communicate through forwarding devices. The forwarding devices form a logical forwarding device through a stacking technology. A fault of an optical fiber between forwarding devices affects the entire network cluster system, or even leads to a system restart.

To protect the stacking system, a common practice is to increase the number of optical fibers between forwarding devices, and then a trunking technology is used to bundle multiple stack links between two forwarding devices together to form a logical link. Members within a trunk provide redundant backup. When one of the stack links is faulty, another stack link within the trunk can be used for connection. Although such a practice improves the link stability between forwarding devices, forwarding devices will not be able to communicate with each other once all the stack links between the forwarding devices are faulty, affecting the normal operation of the network cluster.

### SUMMARY

The following is a summary of the subject matter set forth in this description. This summary is not intended to limit the scope of the claims.

Embodiments of the present disclosure provide a fault processing method, a network element, and a storage medium.

In accordance with a first aspect of the present disclosure, in an embodiment of the present disclosure provided is a fault processing method, applied to a first forwarding device in a stacking system, where the stacking system further includes a second forwarding device, the first forwarding device and the second forwarding device are connected by an aggregated stack link, the aggregated stack link includes at least two stack links, and the stacking system is in communication connection with at least one network device, the method including: determining a target network device from the at least one network device when it is detected that the aggregated stack link is in a disconnected state, where the target network device is respectively in communication connection with the first forwarding device and the second forwarding device; and performing data communication with the second forwarding device through the target network device.

In accordance with a second aspect of the present disclosure, in an embodiment of the present disclosure provided is a fault processing method, applied to a network device, where the network device is in communication connection with a stacking system, and the stacking system includes at least two forwarding devices, the method including: forwarding communication data between a first forwarding device and a second forwarding device when the network device is determined as a target network device, where the first forwarding device and the second forwarding device are respectively in communication connection with the target network device, the first forwarding device and the second forwarding device are connected by an aggregated stack link, the aggregated stack link includes at least two stack links, and the target network device is determined by the first forwarding device and/or the second forwarding device when it is determined that the aggregated stack link is in a disconnected state.

In accordance with a third aspect of the present disclosure, in an embodiment of the present disclosure provided is a network element, including: a memory, a processor, and a computer program stored in the memory and executable by the processor, where the computer program, when executed by the processor, causes the processor to implement the fault processing method in accordance with the first aspect or the fault processing method in accordance with the second aspect.

In accordance with a fourth aspect of the present disclosure, an embodiment of the present disclosure provided is a computer-readable storage medium, storing a computer-executable instruction which, when executed by a processor, causes the processor to implement the fault processing method in accordance with the first aspect or the fault processing method in accordance with the second aspect.

### BRIEF DESCRIPTION OF DRAWINGS

FIG. 1 is a schematic diagram of a network cluster according to an embodiment of the present disclosure;
FIG. 2 is a flowchart of a fault processing method according to another embodiment of the present disclosure;
FIG. 3 is a schematic diagram showing that all stack links of a stacking system in a network cluster are disconnected according to another embodiment of the present disclosure;
FIG. 4 is a flowchart of determining a target network device according to another embodiment of the present disclosure;
FIG. 5 is a flowchart of exchanging topology information according to another embodiment of the present disclosure;
FIG. 6 is a flowchart of splitting a stacking system according to another embodiment of the present disclosure;
FIG. 7 is a schematic diagram of a network cluster after a stacking system is split according to another embodiment of the present disclosure;
FIG. 8 is a flowchart of adjusting a network device trunk after a stacking system is split according to another embodiment of the present disclosure;
FIG. 9 is a schematic diagram of a network cluster after a network device trunk is adjusted according to another embodiment of the present disclosure;
FIG. 10 is a flowchart of selecting a new target network device according to another embodiment of the present disclosure;
FIG. 11 is a flowchart of exchanging topology information according to another embodiment of the present disclosure;
FIG. 12 is a flowchart of re-aggregating stack links according to another embodiment of the present disclosure;
FIG. 13 is a flowchart of a fault processing method according to another embodiment of the present disclosure;
FIG. 14 is a flowchart of adjusting an aggregated network link according to another embodiment of the present disclosure;
FIG. 15 is a flowchart of splitting a stacking system according to another embodiment of the present disclosure;
FIG. 16 is a flowchart of re-aggregating stack links according to another embodiment of the present disclosure;
FIG. 17 is a flowchart of Example One according to another embodiment of the present disclosure;
FIG. 18 is a flowchart of Example Two according to another embodiment of the present disclosure;
FIG. 19 is a flowchart of Example Three according to another embodiment of the present disclosure; and
FIG. 20 is a block diagram of a network element according to another embodiment of the present disclosure.

### DETAILED DESCRIPTION

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

The present disclosure provides a fault processing method, a network element, and a storage medium. The fault processing method includes: determining a target network device from at least one network device when it is detected that the aggregated stack link is in a disconnected state, where the target network device is respectively in communication connection with the first forwarding device and the second forwarding device; and performing data communication with the second forwarding device through the target network device. According to the technical scheme of this embodiment, when all stack links between two forwarding devices are disconnected, the two forwarding devices communicate with each other indirectly through a network device connected thereto, to enable the stacking system to maintain normal operation, thereby improving the stability of the stacking system.

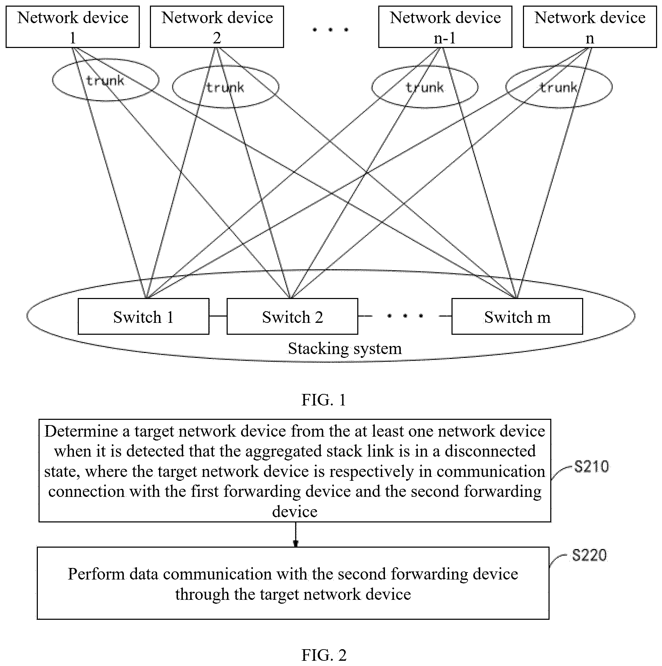

As shown in FIG. 1, which is a schematic diagram of a common network cluster, the network cluster includes m switches and n network devices, where m is a natural number greater than 1, and n is a natural number. The m switches form a logical switch through a stacking technology. Links of each network device and the m switches are bundled through a trunking technology to form a logical link. The network devices communicate with each other through the switches.

The technical schemes of the embodiments of the present disclosure will be described in further detail below on the basis of the network cluster shown in FIG. 1.

As shown in FIG. 2, which is a flowchart of a fault processing method according to an embodiment of the present disclosure, the fault processing method is applied to a first forwarding device in a stacking system. The stacking system further includes a second forwarding device. The first forwarding device and the second forwarding device are connected by an aggregated stack link. The aggregated stack link includes at least two stack links. The stacking system is in communication connection with at least one network device. The fault processing method includes, but not limited to, the following steps S210 and S220.

At S210, a target network device is determined from the at least one network device when it is detected that the aggregated stack link is in a disconnected state, where the target network device is respectively in communication connection with the first forwarding device and the second forwarding device.

It should be noted that the forwarding devices in this embodiment may be switches in a network cluster, which are devices having a multi-port forwarding function, and the network device may be a router, a switch, etc. For ease of description, unless otherwise specified, the forwarding devices are switches in the following embodiments, where the first forwarding device is a switch 1, and the second forwarding device is a switch 2. However, the technical scheme of this embodiment is not limited thereto.

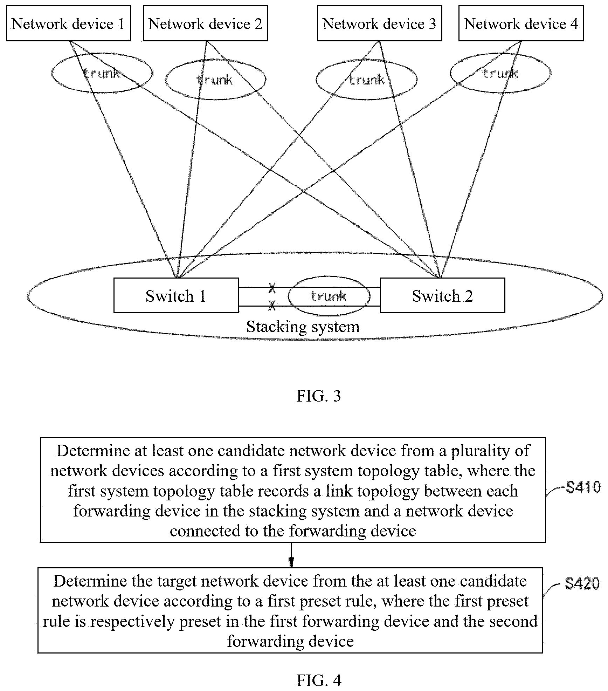

It should be noted that an aggregated stack link is a trunk between two switches. The trunk may be obtained by aggregating at least two stack links. For example, as shown in FIG. 3, the trunk is obtained by aggregating two stack links between the switch 1 and the switch 2. The stack links are actually optical fiber and other cables, which are susceptible to problems, such as aging, loosening, and being pulled out, leading to link abnormality. When both the two stack links are faulty, the switch 1 and the switch 2 cannot communicate with each other. In this case, according to this embodiment, one of network devices connected to both the switch 1 and the switch 2 is selected as an indirect communication channel, to ensure that the switch 1 and the switch 2 can communicate with each other, so as not to affect the normal operation of the network cluster. For example, as shown in FIG. 3, four network devices are connected to both the switch 1 and the switch 2. Therefore, any one of the four network devices may be selected as a target network device to function as a relay for communication between the switch 1 and the switch 2, such that the switch 1 and the switch 2 can maintain communication with each other, and the stacking system can continue to operate, thereby improving the stability of the system.

It should be noted that the technical scheme of this embodiment is based on a scenario where all the stack links in the aggregated stack link are disconnected, and scenarios where there is still at least one available stack link between the switch 1 and the switch 2 are not within the scope of discussion of this embodiment.

It should be noted that when a plurality of network devices in the network cluster are connected to both the switch 1 and the switch 2, the target network device may be selected according to any rule, for example, the network device with the shortest transmission link or the network device with optimal network resources may be selected, which is not limited in this embodiment.

At S220, data communication is performed with the second forwarding device through the target network device.

It should be noted that the target network device is in communication connection with two forwarding devices at the same time, so a communication link of the target network device can be used as an indirect communication channel of the stacking system. As shown in FIG. 3, when all the stack links between the switch 1 and the switch 2 are disconnected, the network device 1 may be selected as the target network device, the switch 1 sends information to be sent to the switch 2 to the network device 1, and the network device 1 forwards the information to the switch 2. As such, data communication between the two switches is achieved.

In addition, in an embodiment, referring to FIG. 4, the step S210 in the embodiment shown in FIG. 2 further includes, but not limited to, the following steps:
S410, at least one candidate network device is determined from a plurality of network devices according to a first system topology table, where the first system topology table records a link topology between each forwarding device in the stacking system and a network device connected to the forwarding device.
S420, the target network device is determined from the at least one candidate network device according to a first preset rule, where the first preset rule is respectively preset in the first forwarding device and the second forwarding device.

It should be noted that the first system topology table is a data table stored locally in the first forwarding device, and similarly, the second forwarding device may locally store a topology table recording the same content as that of the first system topology table, as long as each forwarding device in the stacking system knows a current network topology of the network cluster.

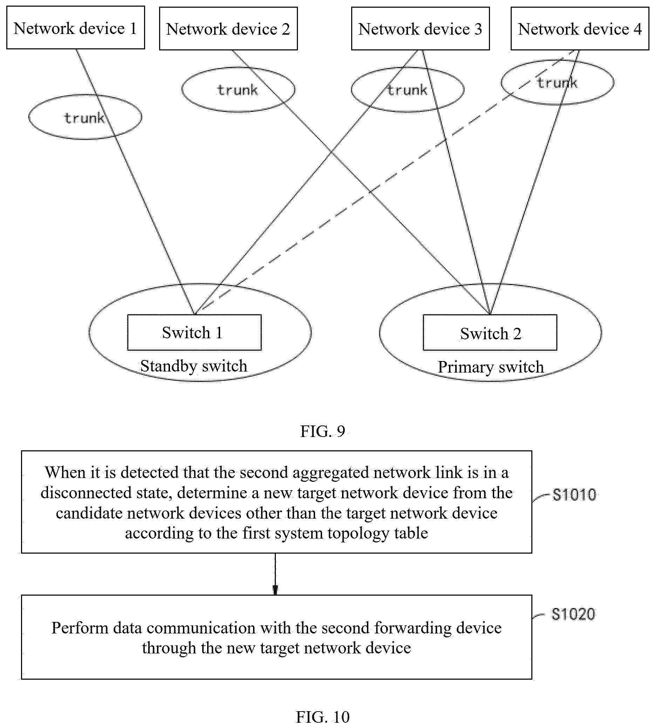

It should be noted that the first system topology table may be acquired in various manners. For example, for a forwarding device such as a switch, a network topology between the forwarding device and a plurality of network devices is known. Different switches may exchange data through an aggregated stack link of the stacking system. After acquiring topology information synchronized from all other switches, the switch 1 summarizes the topology information to obtain a system topology table of the network cluster. Alternatively, the first system topology table may be inputted manually, or may be acquired in other manners. The manner of acquiring the first system topology table in this embodiment is not particularly limited herein, and may be adjusted according to actual needs. After obtaining the first system topology table of the entire network cluster, each switch can determine corresponding candidate network devices. As shown in FIG. 3, it is known that the switch 1 is connected to all the four network devices, and as can be learned from the first system topology table, the switch 2 is also connected to all the four network devices. In this case, all the four network devices may be determined as candidate network devices. For another example, as shown in FIG. 9, the switch 1 is in communication connection with the network device 1, the network device 3, and the network device 4, and as can be learned from the first system topology table, the switch 2 is in communication connection with the network device 2, the network device 3, and the network device 4. In this case, the network device 3 and the network device 4 may be determined as candidate network devices. Other cases will not be enumerated herein.

It should be noted that, according to the network cluster shown in FIG. 1, the stacking system may be formed by stacking of m switches, and when each switch has a system topology table, a network topology of each switch is known. Therefore, the same first preset rule may be set for each switch, such that each switch can simultaneously determine the target network device according to the same first preset rule after learning of a faulty stack link. For example, as shown in FIG. 9, when all the stack links between the switch 1 and the switch 2 are disconnected, the first preset rule is selecting the candidate network device with a top-ranked sequence number as the target network device, and the candidate network devices include the network device 3 and the network device 4, the switch 1 and the switch 2 simultaneously determine the network device 3 as the target network device according to the first preset rule, and perform subsequent operations. By setting the same first preset rule in each forwarding device, the efficiency of determining the target network device can be effectively improved, and it can be ensured that the target network device is determined by the forwarding devices, such that the efficiency of fault processing can be effectively improved.

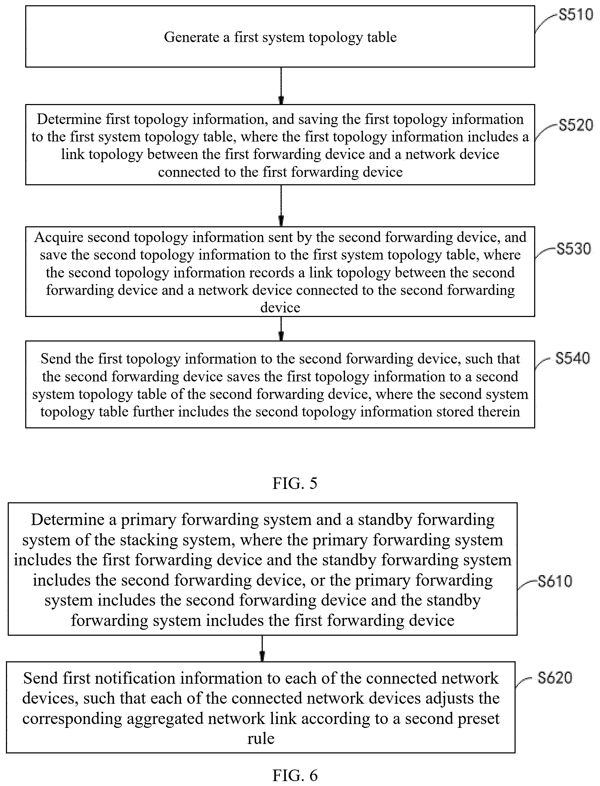

In addition, in an embodiment, referring to FIG. 5, before S410 in the embodiment shown in FIG. 4, the method further includes, but not limited to, the following steps:
S510, a first system topology table is generated.
S520, first topology information is determined, and the first topology information is saved to the first system topology table, where the first topology information includes a link topology between the first forwarding device and a network device connected to the first forwarding device.
S530, second topology information sent by the second forwarding device is acquired, and the second topology information is saved to the first system topology table, where the second topology information records a link topology between the second forwarding device and a network device connected to the second forwarding device.

It should be noted that the process of each forwarding device determining the network devices in communication connection therewith is a technique well known to those having ordinary skills in the art, so the details will not be described herein. Before that, each forwarding device may create a system topology table locally. For example, as shown in FIG. 3, the switch 1 may create a first system topology table locally, and the switch 2 may create a second system topology table locally. Then, the switch 1 may acquire a link topology between the switch 1 and network devices connected to the switch 1, and the switch 2 may acquire a link topology between the switch 2 and network devices connected to the switch 2. For example, first topology information acquired by the switch 1 is that the network devices connected to the switch 1 include the network devices 1 to 4, and is recorded in the first system topology table, and second topology information that acquired by the switch 2 is that the network devices connected to the switch 2 include the network devices 1 to 4, and is recorded in the second system topology table. To acquire the link topology of the entire network cluster, the switch 1 may acquire the second topology information from the switch 2 and save the second topology information in the first system topology table. In this way, when a stack link becomes faulty, a target network element can be quickly determined according to the link topology of each network element.

In addition, in an embodiment, still referring to FIG. 5, after S530, the method further includes, but not limited to, a following step:
S540, the first topology information is sent to the second forwarding device, such that the second forwarding device saves the first topology information to a second system topology table of the second forwarding device, where the second system topology table further includes the second topology information stored therein.

It should be noted that not only the switch 1 can acquire the link topology of the entire network cluster, but also each switch in the stacking system can acquire the link topology of the entire network cluster by topology training. For example, on the basis of the above embodiment, the switch 1 and the switch 2 exchange topology information with each other, i.e., the switch 1 informs the switch 2 of the first topology information, and the switch 2 informs the switch 1 of the second topology information. The switch 1 saves the second topology information to the first system topology table, thus obtaining a link topology between the entire stacking system and all the network devices. The switch 2 saves the first topology information to the second system topology table, thus obtaining the link topology between the entire stacking system and all the network devices.

It should be noted that the sending of the first topology information and the second topology information may be implemented in various manners. For example, in the network cluster shown in FIG. 1, when no stack link is faulty, the switches may exchange information through the stack links or may broadcast information through a network device. For example, the switch 1 sends the first topology information to the network device 1, and the network device 1 broadcasts the first topology information to the other m-1 network devices. The manner of information sending may be selected according to actual needs, and is not particularly limited in this embodiment.

It should be noted that the switches may monitor the link topology of the stacking system in real time, or may perform information synchronization periodically. The manner of monitoring may be adjusted according to a requirement of the network cluster, and is not particularly limited in this embodiment.

In addition, in an embodiment, each of the at least one network device is in communication connection with the stacking system through an aggregated network link, and referring to FIG. 6, before S410 in the embodiment shown in FIG. 4, the method further includes, but not limited to, the following steps:
S610, a primary forwarding system and a standby forwarding system of the stacking system are determined, where the primary forwarding system includes the first forwarding device and the standby forwarding system includes the second forwarding device, or the primary forwarding system includes the second forwarding device and the standby forwarding system includes the first forwarding device.
S620, first notification information is sent to each of the connected network devices, such that each of the connected network devices adjusts the corresponding aggregated network link according to a second preset rule.

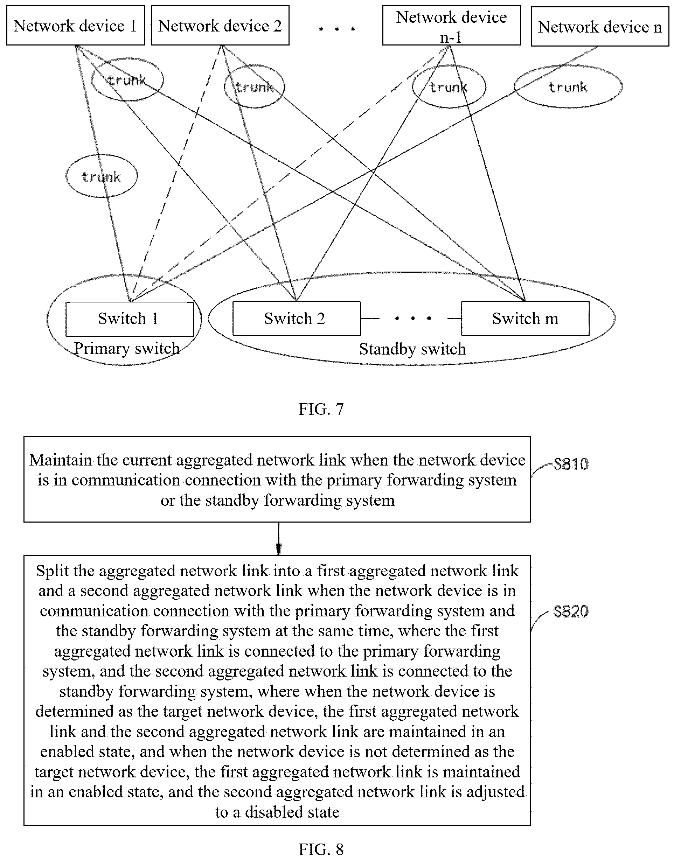

It should be noted that a network cluster shown in FIG. 7 includes m switches and n network devices. When none of stack links between a switch 1 and a switch 2 is available, the switch 1 and the switch 2 cannot form a logical switch through stacking. In this case, the stacking system may be split into a primary forwarding system and a standby forwarding system. The primary forwarding system may include a plurality of switches. The plurality of switches belonging to the primary forwarding system may form a primary switch through stacking. Similarly, switches in the standby forwarding system may form a standby switch through stacking. The primary forwarding system and the standby forwarding system may be determined according to the number of forwarding devices included. For example, as shown in FIG. 7, after the splitting, the system to which the switch 1 belongs includes one switch, and the system to which the switch 2 belongs includes m-1 switches. Therefore, the system to which the switch 2 belongs may be used as the primary forwarding system to form a primary switch through stacking, and the switch 1 may be used as a standby switch.

It should be noted that a plurality of transmission links may be set between the network device and each switch, and the links may be aggregated through a trunking technology, i.e., the network device is in communication connection with each switch in the stacking system through an aggregated network link. For a network device connected to at least two switches, trunks connected to each switch may be further aggregated. For example, as shown in FIG. 3, the network device 1 is connected to the switch 1 and the switch 2 respectively through a trunk, and the two trunks may be aggregated into one trunk. In this case, when the switch 1 and the switch 2 belong to different forwarding systems, e.g., when the switch 1 is a standby switch and the switch 2 is stacked with other switches to form a primary switch as shown in FIG. 7, the standby switch cannot be stacked with the switches in the primary switch. Therefore, the network device may adjust the aggregated network link to form a new network cluster with the primary switch for data communication.

It should be noted that the second preset rule may be adjusted according to actual needs, and is not particularly limited in this embodiment. For example, each of the candidate network devices other than the target network device splits the initial trunk into two trunks and disconnects the trunk to the standby switch.

It should be noted that the first notification information may be in any form, such as a packet, a notification message, etc., which is not particularly limited in this embodiment. The first notification information may carry a device identifier of the network device determined as the target network device, such that each network device determines a status of determining of the target network device according to the first notification information. According to the description of the above embodiment, each switch may determine the target network device according to the first preset rule, but the network device is not aware of this. In this embodiment, each switch informs the network device by sending notification information to the network device. For example, in the network cluster shown in FIG. 7, after determining the network device 1 as the target network device, the switch 1 may send the first notification information to all the n network devices connected thereto, where the first notification information carries information indicating that a serial number of the target network device is a serial number 1. After receiving the first notification information, the network device 1 determines that the serial number of the target network device is the same as its own serial number, and determines itself as the target network device. Each of the network devices other than the network device 1 finds that the serial number carried in the first notification information is different from its own serial number and determines that it is not the target network device. The above example is one of examples of the first notification information, and other message carriers and notification methods may also be used, which is not particularly limited herein.

In addition, in an embodiment, referring to FIG. 8, the second preset rule includes, but not limited to, a following step:
S810, the current aggregated network link is maintained when the network device is in communication connection with the primary forwarding system or the standby forwarding system; or
S820, the aggregated network link is split into a first aggregated network link and a second aggregated network link when the network device is in communication connection with the primary forwarding system and the standby forwarding system at the same time, where the first aggregated network link is connected to the primary forwarding system, and the second aggregated network link is connected to the standby forwarding system, where when the network device is determined as the target network device, the first aggregated network link and the second aggregated network link are maintained in an enabled state, and when the network device is not determined as the target network device, the first aggregated network link is maintained in an enabled state, and the second aggregated network link is adjusted to a disabled state.

It should be noted that according to the description of the above embodiment, the standby forwarding system cannot be stacked with a plurality of forwarding devices. Therefore, after the primary forwarding system is stacked into the primary switch, its communication efficiency is higher than that of the standby switch, and the network device may preferentially perform data communication with the primary switch.

For example, in the network cluster shown in FIG. 7, when the switch 1 is determined as a standby switch, and the switches 2 to n are stacked into a primary switch, the network device 1 is determined as a target network device that needs to serve as an indirect communication channel to maintain communication between the switch 1 and the switch 2. An aggregated network link of the network device 1 may be split into a first aggregated network link and a second aggregated network link, i.e., a trunk of the network device 1 is split into two trunks, one of which is connected to the switch 1 and the other of which is connected to the primary switch. The network devices 2 to n-1 are candidate network devices, which do not need to relay the communication between the switch 1 and the switch 2. A communication link between each of the network devices 2 to n-1 and the switch 1 may be separated from the original trunk and disabled to ensure communication efficiency. The network device n is in communication connection with only the switch 1, and therefore maintains the current communication link. The adjustment of the aggregated network link enables the network cluster to adapt to a fault in a stack link, thereby effectively improving the flexibility and stability of the network cluster.

It should be noted that FIG. 7 shows an example where the standby forwarding system includes one switch and the primary forwarding system includes n-1 switches, and FIG. 9 shows another example where the standby forwarding system and the primary forwarding system each include one switch. The number of forwarding devices in the primary forwarding system and the number of forwarding devices in the standby forwarding system are not particularly limited in this embodiment, and may be determined according to the actual number of devices in the stacking system.

In addition, in an embodiment, referring to FIG. 10, after S820 in the embodiment shown in FIG. 8, the method further includes, but not limited to, the following steps:
S1010, when it is detected that the second aggregated network link is in a disconnected state, a new target network device is determined from the candidate network devices other than the target network device according to the first system topology table.
S1020, data communication is performed with the second forwarding device through the target network device.

It should be noted that according to the description of the above embodiment, the target network device is respectively connected to the first forwarding device and the second forwarding device. For example, as shown in FIG. 9, the target network device is the network device 3, which is connected to the switch 1 and the switch 2 respectively through a trunk. The network device 4 is not determined as the target network device, and a communication link between the network device 4 and the switch 1 (denoted by a dashed line in FIG. 9) is disabled. A link of the target network device is also at risk of aging, loosening, being pulled out, etc. When the second aggregated network link is in a disconnected state, i.e., the link between the network device 3 and the switch 1 in FIG. 9 is disconnected, the network device 3 cannot implement indirect communication between the switch 1 and the switch 2. In this case, a new target network device needs to be determined. For example, it is determined according to the first system topology table that the network device 4 is another candidate network device, the network device 4 is determined as a new target network device, and the link between the network device 4 and the switch 1 (denoted by a dashed line in FIG. 9) is enabled, and aggregated with a link between the network device 4 and the switch 2 into a new trunk, to ensure that the switch 1 and the switch 2 can communicate indirectly through the network device 4.

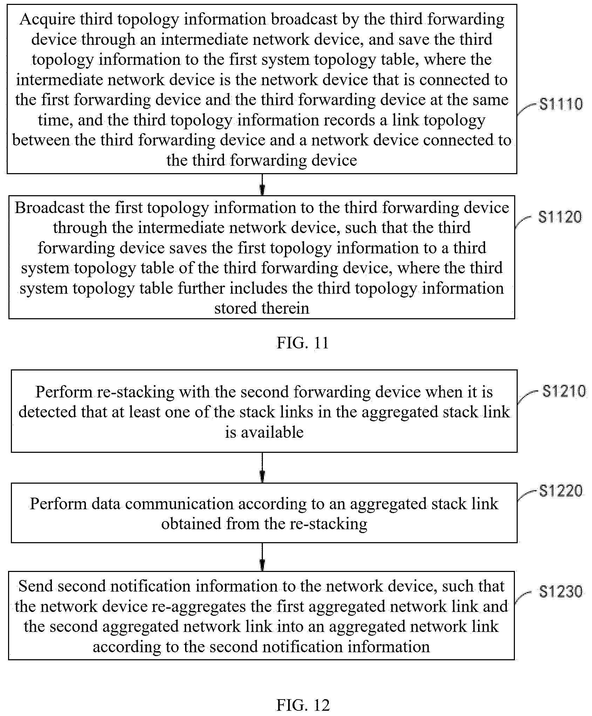

In addition, in an embodiment, referring to FIG. 11, the primary forwarding system at least further includes a third forwarding device, and after S520 in the embodiment shown in FIG. 5, the method further includes, but not limited to, a following step S1110.

S1110, third topology information broadcast by the third forwarding device is acquired through an intermediate network device, and the third topology information is saved to the first system topology table, where the intermediate network device is the network device that is connected to the first forwarding device and the third forwarding device at the same time, and the third topology information records a link topology between the third forwarding device and a network device connected to the third forwarding device.

It should be noted that, the stacking system may include a plurality of forwarding devices which are connected in sequence and stacked into a logical switch. When the stacking system includes a third forwarding device or more forwarding devices, topology training may be performed to enable each forwarding device to store the link topology of the entire network cluster. For a case where the stacking system consists of two forwarding devices, reference may be made to the description of the embodiment shown in FIG. 5, and the details will not be repeated herein. For cases where the stacking system includes three or more forwarding devices, as shown in FIG. 7, the stacking system includes m switches, where m>2. After acquiring the first topology information and saving the first topology information to the local first system topology table, the switch 1 may further acquire third topology information sent by the switch 3 and save the third topology information to the first system topology table, to ensure that the first system topology table of the switch 1 records the link topology of the entire network cluster.

In addition, in an embodiment, referring to FIG. 11, the method further includes, but not limited to, the following step:
S1120, the first topology information is broadcast to the third forwarding device through the intermediate network device, such that the third forwarding device saves the first topology information to a third system topology table of the third forwarding device, where the third system topology table further includes the third topology information stored therein.

It should be noted that on the basis of S1110, the switch 1 may also send the first topology information to each network device through an intermediate network device, and each network device broadcasts the first topology information to each switch connected thereto, such that each switch can acquire the first topology information and save the first topology information in the local system topology table. Other switches also broadcast the topology information through the network device in the same manner, and the details will not be repeated herein. Through the topology training, i.e., broadcasting of the topology information by the network devices, each switch can determine the link topology of the entire network cluster according to the topology information broadcast by the network devices, and can synchronously determine an allocation status of the network devices and the primary and standby switches according to the link topology of the entire network cluster and the preset first preset rule when a fault occurs in a stack link, thereby improving the stability of the network cluster.

In addition, in an embodiment, referring to FIG. 12, after S220 in the embodiment shown in FIG. 2, the method further includes, but not limited to, the following steps:
S1210, re-stacking with the second forwarding device is performed when it is detected that at least one of the stack links in the aggregated stack link is available.
S1220, data communication is performed according to an aggregated stack link obtained from the re-stacking.
S1230, second notification information is sent to the network device, such that the network device re-aggregates the first aggregated network link and the second aggregated network link into an aggregated network link according to the second notification information.

It should be noted that as shown in FIG. 3, the two stack links between the switch 1 and the switch 2 are faulty. After the target network device is determined for indirect communication, when at least one of the stack links between the switch 1 and the switch 2 is restored to be available, the switch 1 and the switch 2 may be re-stacked into a logical switch, to improve the communication efficiency of the stacking system. A method of stacking two switches when there is a link available for communication between the two switches is a technique well known to those having ordinary skills in the art, so the details will not be repeated herein.

It should be noted that the restoration of a stack link between the switch 1 and the switch 2 to be available may be determined by the topology training method described in the above embodiment, i.e., after the switches periodically exchange their local topology information, the switch 1 and the switch 2 determine according to the system topology table that at least one stack link is available.

It should be noted that, after the switch 1 and the switch 2 are re-stacked, there is no need to perform indirect communication through the target network device, and for the standby network devices that have disabled their transmission links to the standby switch, the switch may use the second notification information to inform the standby network devices to enable the disabled transmission links and restore the aggregated network link that is before the stacking system is split. The manner of aggregation and the type of the second notification information are not particularly limited herein.

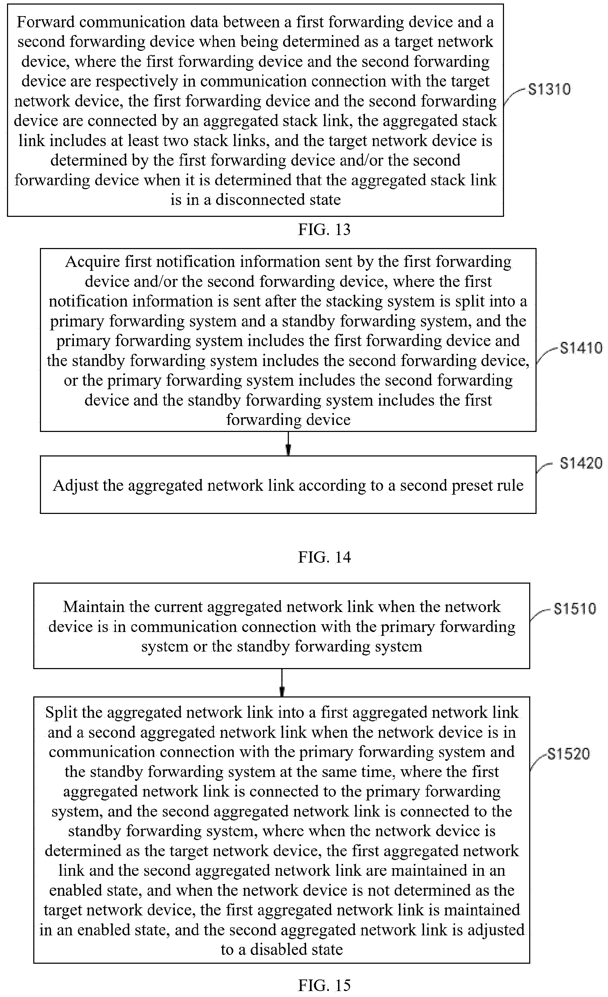

In addition, an embodiment of the present disclosure provides a fault processing method, applied to a network device. The network device is in communication connection with a stacking system. The stacking system includes at least two forwarding devices. Referring to FIG. 13, the fault processing method includes, but not limited to, the following step:
S 1310, communication data between a first forwarding device and a second forwarding device is forwarded when the network device is determined as a target network device, where the first forwarding device and the second forwarding device are respectively in communication connection with the target network device, the first forwarding device and the second forwarding device are connected by an aggregated stack link, the aggregated stack link includes at least two stack links, and the target network device is determined by the first forwarding device and/or the second forwarding device when it is determined that the aggregated stack link is in a disconnected state.

It should be noted that the technical scheme of this embodiment is similar to the technical scheme described in the embodiment shown in FIG. 2, except that the technical scheme of this embodiment is executed by the target network device. The details will not be repeated herein for simplicity of description.

In addition, in an embodiment, the network device is in communication connection with the stacking system through an aggregated network link, and referring to FIG. 14, before S1310 in the embodiment shown in FIG. 13, the method further includes, but not limited to, the following steps:
S1410, first notification information sent by the first forwarding device and/or the second forwarding device is acquired, where the first notification information is sent after the stacking system is split into a primary forwarding system and a standby forwarding system, and the primary forwarding system includes the first forwarding device and the standby forwarding system includes the second forwarding device, or the primary forwarding system includes the second forwarding device and the standby forwarding system includes the first forwarding device.
S1420, the aggregated network link is adjusted according to a second preset rule.

It should be noted that the technical scheme of this embodiment is similar to the technical scheme described in the embodiment shown in FIG. 6, except that the technical scheme of this embodiment is executed by the target network device. The details will not be repeated herein for simplicity of description.

In addition, in an embodiment, referring to FIG. 15, the second preset rule includes, but not limited to, the following step:
S1510, the current aggregated network link is maintained when the network device is in communication connection with the primary forwarding system or the standby forwarding system; or
S1520, the aggregated network link is split into a first aggregated network link and a second aggregated network link when the network device is in communication connection with the primary forwarding system and the standby forwarding system at the same time, where the first aggregated network link is connected to the primary forwarding system, and the second aggregated network link is connected to the standby forwarding system, where when the network device is determined as the target network device, the first aggregated network link and the second aggregated network link are maintained in an enabled state, and when the network device is not determined as the target network device, the first aggregated network link is maintained in an enabled state, and the second aggregated network link is adjusted to a disabled state.

It should be noted that the technical scheme of this embodiment is similar to the technical scheme described in the embodiment shown in FIG. 8, except that the technical scheme of this embodiment is executed by the target network device. The details will not be repeated herein for simplicity of description.

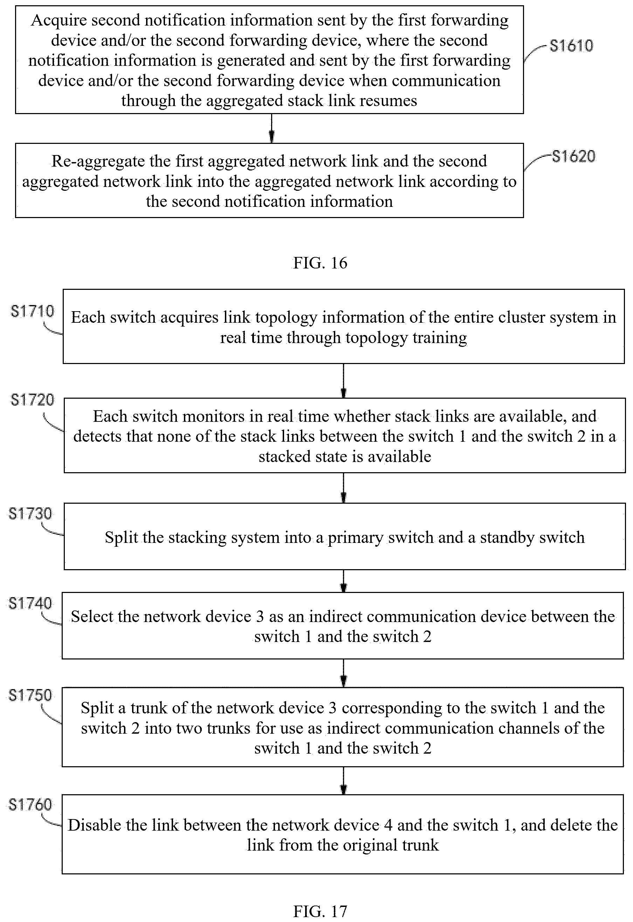

In addition, in an embodiment, referring to FIG. 16, after S1520 in the embodiment shown in FIG. 15, the method further includes, but not limited to, the following steps:
S1610, second notification information sent by the first forwarding device and/or the second forwarding device is acquired, where the second notification information is generated and sent by the first forwarding device and/or the second forwarding device when communication through the aggregated stack link is resumed.
S1620, the first aggregated network link and the second aggregated network link are re-aggregated into the aggregated network link according to the second notification information.

It should be noted that the technical scheme of this embodiment is similar to the technical scheme described in the embodiment shown in FIG. 12, except that the technical scheme of this embodiment is executed by the target network device. The details will not be repeated herein for simplicity of description.

To better illustrate the technical scheme of the embodiments of the present disclosure, three examples are proposed below based on the cluster system shown in FIG. 9. In the following three examples, forwarding devices in the stacking system are switches, and aggregated links between network devices and switches are trunks.

### Example One:

In this example, a faulty stack link is a link between the switch 1 and the switch 2, the switch 1 is a standby switch after splitting, the switch 2 is a primary switch after splitting, and the network device 3 is an indirect network channel determined initially. Referring to FIG. 17, this example includes, but not limited to, the following steps:
S1710, each switch acquires link topology information of the entire cluster system in real time through topology training.
S1720, each switch monitors in real time whether stack links are available, and detects that none of the stack links between the switch 1 and the switch 2 in a stacked state is available.
S1730, the stacking system is split into a primary switch and a standby switch, where the switch 1 is the primary switch and the switch 2 is the standby switch.
S1740, the network device 3 is selected as an indirect communication device between the switch 1 and the switch 2.
S1750, a trunk of the network device 3 corresponding to the switch 1 and the switch 2 is split into two trunks for use as indirect communication channels of the switch 1 and the switch 2.
S1760, the link between the network device 4 and the switch 1 is disabled, and the link is deleted from the original trunk.

It should be noted that a method of the topology training includes the following steps that: each switch creates a system network topology table locally and performs initialization; each switch periodically acquires its own network topology information and updates the network topology information to the local system network topology table; each switch periodically sends network topology information to the network device; and the network device broadcasts the received network topology information of each switch to other switches, and each switch, after receiving the network topology information, updates the network topology information sent by the remote switches to the local system topology information.

### Example Two:

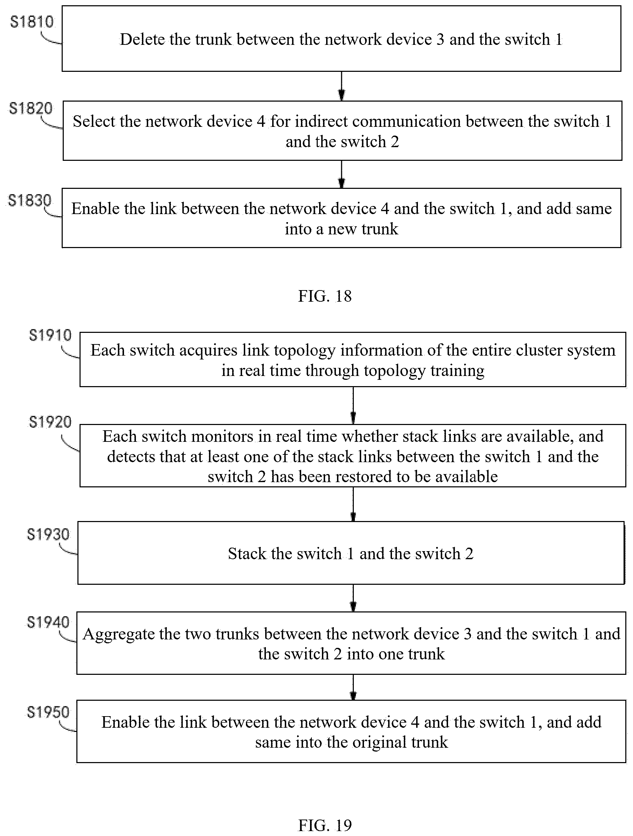

This example is based on Example One. Referring to FIG. 18, when the trunk between the network device 3 and the switch 1 is faulty, this example includes, but not limited to, the following steps:
S1810, the trunk between the network device 3 and the switch 1 is deleted.
S1820, the network device 4 is selected for indirect communication between the switch 1 and the switch 2.
S1830, the link between the network device 4 and the switch 1 is enabled, and is added into a new trunk.

### Example Three:

This example is based on Example One. Referring to FIG. 19, when a stack link between the switch 1 and the switch 2 is restored to be available for communication, this example includes, but not limited to, the following steps:
S1910, each switch acquires link topology information of the entire cluster system in real time through topology training.
S1920, each switch monitors in real time whether stack links are available, and detects that at least one of the stack links between the switch 1 and the switch 2 has been restored to be available.
S1930, the switch 1 and the switch 2 are stacked.
S1940, the two trunks between the network device 3 and the switch 1 and the switch 2 are aggregated into one trunk.
S1950, the link between the network device 4 and the switch 1 is enabled, and is added into the original trunk.

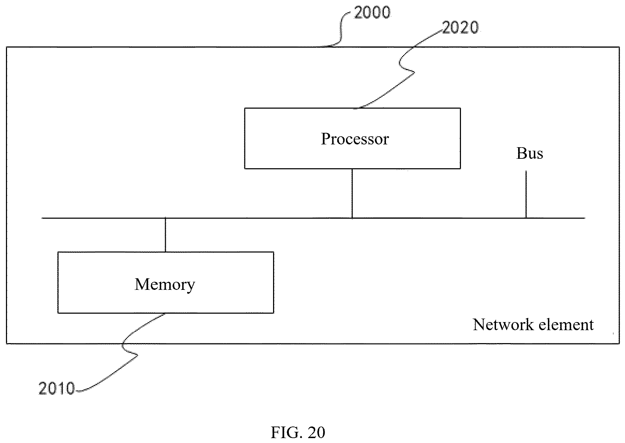

Further, referring to FIG. 20, an embodiment of the present disclosure provides a network element 2000, including: a memory 2010, a processor 2020, and a computer program stored in the memory 2010 and executable by the processor 2020.

The processor 2020 and the memory 2010 may be connected by a bus or in other ways.

The non-transitory software program and instructions required to implement the fault processing method of the foregoing embodiments are stored in the memory 2010 which, when executed by the processor 2020, cause the processor 2020 to implement the fault processing method of the foregoing embodiments, for example, implement the method steps S210 to S220 in FIG. 2, the method steps S410 to S420 in FIG. 4, the method steps S510 to S540 in FIG. 5, the method steps S610 to S620 in FIG. 6, the method steps S810 to S820 in FIG. 8, the method steps S1010 to S1020 in FIG. 10, the method steps S1110 to S1120 in FIG. 11, the method steps S1210 to S1230 in FIG. 12, the method step S1310 in FIG. 13, the method steps S1410 to S1420 in FIG. 14, the method steps S1510 to S1520 in FIG. 15, the method steps S1610 to S1620 in FIG. 16, the method steps S1710 to S1760 in FIG. 17, the method steps S1810 to S1830 in FIG. 18, or the method steps S1910 to S1950 in FIG. 19.

The apparatus embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

An embodiment of the present disclosure includes: determining a target network device from the at least one network device when it is detected that the aggregated stack link is in a disconnected state, where the target network device is respectively in communication connection with the first forwarding device and the second forwarding device; and performing data communication with the second forwarding device through the target network device. According to the technical scheme of this embodiment, when all stack links between two forwarding devices are disconnected, the two forwarding devices communicate with each other indirectly through a network device connected thereto, to enable the stacking system to maintain normal operation, thereby improving the stability of the stacking system.

In addition, an embodiment of the present disclosure provides a computer-readable storage medium, storing a computer-executable instruction which, when executed by a processor or controller, for example, by a processor in the network element embodiment described above, may cause the processor to implement the fault processing method of the foregoing embodiments, for example, implement the method steps S210 to S220 in FIG. 2, the method steps S410 to S420 in FIG. 4, the method steps S510 to S540 in FIG. 5, the method steps S610 to S620 in FIG. 6, the method steps S810 to S820 in FIG. 8, the method steps S1010 to S1020 in FIG. 10, the method steps S1110 to S1120 in FIG. 11, the method steps S1210 to S1230 in FIG. 12, the method step S1310 in FIG. 13, the method steps S1410 to S1420 in FIG. 14, the method steps S1510 to S1520 in FIG. 15, the method steps S1610 to S1620 in FIG. 16, the method steps S1710 to S1760 in FIG. 17, the method steps S1810 to S1830 in FIG. 18, or the method steps S1910 to S1950 in FIG. 19. Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium or non-transitory medium and a communication medium or transitory medium. As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some embodiments of the present disclosure have been described above, the present disclosure is not limited to the embodiments described above. Those having ordinary skills in the art can make various equivalent modifications or replacements without departing from the essence of the present disclosure. Such equivalent modifications or replacements fall within the scope defined by the claims of the present disclosure.

## Claims

1. A fault processing method, applied to a first forwarding device in a stacking system, wherein the stacking system further comprises a second forwarding device, the first forwarding device and the second forwarding device are connected by an aggregated stack link, the aggregated stack link comprises at least two stack links, and the stacking system is in communication connection with at least one network device, and the method comprising:
determining a target network device from the at least one network device in response to detecting that the aggregated stack link is in a disconnected state, wherein the target network device is in communication connection with the first forwarding device and the second forwarding device respectively; and
performing data communication with the second forwarding device through the target network device.

2. The method of claim 1, wherein determining a target network device from the at least one network device comprises:
determining at least one candidate network device from a plurality of network devices according to a first system topology table, wherein the first system topology table records a link topology between each forwarding device in the stacking system and a network device connected to the forwarding device; and
determining the target network device from the at least one candidate network device according to a first preset rule, wherein the first preset rule is preset in the first forwarding device and the second forwarding device respectively.

3. The method of claim 2, wherein before determining at least one candidate network device from a plurality of network devices according to a first system topology table, the method further comprises:
generating a first system topology table;
determining first topology information, and saving the first topology information to the first system topology table, wherein the first topology information comprises a link topology between the first forwarding device and a network device connected to the first forwarding device; and
acquiring second topology information sent by the second forwarding device, and saving the second topology information to the first system topology table, wherein the second topology information records a link topology between the second forwarding device and a network device connected to the second forwarding device.

4. The method of claim 3, wherein after generating a first system topology table, the method further comprises:
sending the first topology information to the second forwarding device, such that the second forwarding device saves the first topology information to a second system topology table of the second forwarding device, wherein the second system topology table further comprises the second topology information stored therein.

5. The method of claim 3, wherein each of the at least one network device is in communication connection with the stacking system through an aggregated network link, after determining the target network device from the at least one candidate network device according to a first preset rule, the method further comprises:
determining a primary forwarding system and a standby forwarding system of the stacking system, wherein the primary forwarding system comprises the first forwarding device and the standby forwarding system comprises the second forwarding device, or the primary forwarding system comprises the second forwarding device and the standby forwarding system comprises the first forwarding device; and
sending first notification information to each of the connected network devices, such that each of the connected network devices adjusts the corresponding aggregated network link according to a second preset rule.

6. The method of claim 5, wherein the second preset rule comprises:
maintaining the current aggregated network link in response to the network device being in communication connection with the primary forwarding system or the standby forwarding system; or
splitting the aggregated network link into a first aggregated network link and a second aggregated network link in response to the network device being in communication connection with the primary forwarding system and the standby forwarding system at the same time, wherein the first aggregated network link is connected to the primary forwarding system, and the second aggregated network link is connected to the standby forwarding system, wherein in response to the network device being determined as the target network device, the first aggregated network link and the second aggregated network link are maintained in an enabled state, and in response to the network device being not determined as the target network device, the first aggregated network link is maintained in an enabled state, and the second aggregated network link is adjusted to a disabled state.

7. The method of claim 6, wherein after performing data communication with the second forwarding device through the target network device, the method further comprises:
in response to detecting that the second aggregated network link is in a disconnected state, determining a new target network device from the candidate network devices other than the target network device according to the first system topology table; and
performing data communication with the second forwarding device through the new target network device.

8. The method of claim 5, wherein the primary forwarding system at least further comprises a third forwarding device, and after saving the first topology information to the first system topology table, the method further comprises:
acquiring third topology information broadcast by the third forwarding device through an intermediate network device, and saving the third topology information to the first system topology table, wherein the intermediate network device is the network device that is connected to the first forwarding device and the third forwarding device at the same time, and the third topology information records a link topology between the third forwarding device and a network device connected to the third forwarding device.

9. The method of claim 8, wherein after saving the third topology information to the first system topology table, the method further comprises:
broadcasting the first topology information to the third forwarding device through the intermediate network device, such that the third forwarding device saves the first topology information to a third system topology table of the third forwarding device, wherein the third system topology table further comprises the third topology information stored therein.

10. The method of claim 5, wherein after performing data communication with the second forwarding device through the target network device, the method further comprises:
performing re-stacking with the second forwarding device in response to detecting that at least one of the stack links in the aggregated stack link is available;
performing data communication according to an aggregated stack link obtained from the re-stacking; and
sending second notification information to the network device, such that the network device re-aggregates the first aggregated network link and the second aggregated network link into an aggregated network link according to the second notification information.

11. A fault processing method, applied to a network device, wherein the network device is in communication connection with a stacking system, and the stacking system comprises at least two forwarding devices, and the method comprising:
forwarding communication data between a first forwarding device and a second forwarding device in response to the network device being determined as a target network device, wherein the first forwarding device and the second forwarding device are respectively in communication connection with the target network device, the first forwarding device and the second forwarding device are connected by an aggregated stack link, the aggregated stack link comprises at least two stack links, and the target network device is determined by the first forwarding device and/or the second forwarding device in response to determining that the aggregated stack link is in a disconnected state.

12. The method of claim 11, wherein the network device is in communication connection with the stacking system through an aggregated network link, and before forwarding communication data between a first forwarding device and a second forwarding device, the method further comprises:
acquiring first notification information sent by the first forwarding device and/or the second forwarding device, wherein the first notification information is sent after the stacking system is split into a primary forwarding system and a standby forwarding system, and the primary forwarding system comprises the first forwarding device and the standby forwarding system comprises the second forwarding device, or the primary forwarding system comprises the second forwarding device and the standby forwarding system comprises the first forwarding device; and
adjusting the aggregated network link according to a second preset rule.

13. The method of claim 11, wherein the second preset rule comprises:
maintaining the current aggregated network link in response to the network device being in communication connection with the primary forwarding system or the standby forwarding system; or
splitting the aggregated network link into a first aggregated network link and a second aggregated network link in response to the network device being in communication connection with the primary forwarding system and the standby forwarding system at the same time, wherein the first aggregated network link is connected to the primary forwarding system, and the second aggregated network link is connected to the standby forwarding system, wherein in response to the network device being determined as the target network device, the first aggregated network link and the second aggregated network link are maintained in an enabled state, and in response to the network device being not determined as the target network device, the first aggregated network link is maintained in an enabled state, and the second aggregated network link is adjusted to a disabled state.

14. The method of claim 13, wherein after splitting the aggregated network link into a first aggregated network link and a second aggregated network link, the method further comprises:
acquiring second notification information sent by the first forwarding device and/or the second forwarding device, wherein the second notification information is generated and sent by the first forwarding device and the second forwarding device in response to resumption of communication through the aggregated stack link; and
re-aggregating the first aggregated network link and the second aggregated network link into the aggregated network link according to the second notification information.

15. A network element, comprising: a memory, a processor, and a computer program stored in the memory and executable by the processor, wherein the computer program, when executed by the processor, causes the processor to perform the fault processing method of any one of claims 1 to 10 or the fault processing method of any one of claims 11 to 14.

16. A computer-readable storage medium, storing a computer-executable instruction which, when executed by a processor, causes the processor to perform the fault processing method of any one of claims 1 to 10, or the fault processing method of any one of claims 11 to 14.
